# EUROPEAN PATENT SPECIFICATION

(11) **EP 3 595 343 B1**
(45) Date of publication and mention of the grant of the patent: **18.08.2021**
(21) Application number: 17903448.3
(22) Date of filing: 29.03.2017
(51) Int. Cl.: H04W 8/24, H04W 12/00, H04W 76/10, H04W 76/20, H04W 36/00, H04W 12/03, H04W 12/106

(54) **STORING CIPHERED CONTEXT INFORMATION IN A TERMINAL DEVICE**
SPEICHERN VON VERSCHLÜSSELTEN KONTEXTINFORMATIONEN IN EINEM ENDGERÄT
STOCKAGE D'INFORMATIONS DE CONTEXTE CHIFFRÉES DANS UN DISPOSITIF TERMINAL

(43) Date of publication of application: 15.01.2020
(73) Proprietor: Huawei Technologies Co., Ltd., Longgang District Shenzhen, Guangdong 518129 (CN)
(72) Inventor: HU, Li, Shenzhen, Guangdong 518129 (CN); CHEN, Jing, Shenzhen, Guangdong 518129 (CN); LI, He, Shenzhen, Guangdong 518129 (CN)
(74) Representative: Thun, Clemens
(86) International application number: PCT/CN2017/078609
(87) International publication number: WO 2018/176273

(56) References cited:
- EP-A1- 2 418 884
- EP-A1- 3 485 666
- WO-A1-2017/023196
- CN-A- 104 937 964
- CN-A- 106 102 105
- US-A1- 2010 054 472
- US-A1- 2016 127 894
- US-B2- 9 210 623
- ERICSSON: "Security for RRC Connection Suspend and Resume procedure in solution 18 for Narrow Band CIoT", 3GPP DRAFT; S3-160157_NBCIOT_DISCUSSION PAPER_RRC CONNECTION SUSPEND AND RESUME, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. SA WG3, no. Dubrovnik, Croatia; 20160201 - 20160205 31 January 2016 (2016-01-31), XP051060426, Retrieved from the Internet: URL:http://www.3gpp.org/ftp/Meetings_3GPP_ SYNC/SA3/Docs/ [retrieved on 2016-01-31]

## Description

### TECHNICAL FIELD

This application relates to the field of communications technologies, and in particular, wireless communication methods, to the related apparatuses and finally to the related computer program products.

### BACKGROUND

In a long term evolution (Long Term Evolution, LTE) network, after a terminal is powered on, if the terminal detects a network signal, the terminal requests to attach to the network. After the terminal successfully attaches to the network, a network side device stores context information of the terminal. The network side device may be a mobility management entity (Mobility Management Entity, MME), a serving gateway (Service Gateway, S-GW), a base station, or the like. The context information of the terminal includes mobility context information, connectivity context information, security context information, charging context information, and the like. The context information of the terminal may be used by the network side device to establish a secure communication connection for the terminal.

After the communication connection between the terminal and the network side device is successfully established, the terminal enters a registration connected (ECM-CONNECTED) state, and the terminal can communicate with the network side device. If the terminal does not communicate with the network side device within a period of time, the terminal disconnects the communication connection from the network side device, and enters a registration idle (ECM-IDLE) state. When the terminal is in the ECM-IDLE state, if the terminal receives a paging instruction from the network side device or has a to-be-sent uplink message, the terminal sends a service request to the network side device. The network side device may directly obtain the stored context information of the terminal after receiving the service request, and then restore, based on the context information of the terminal, communication with the network side device for the terminal.

To enable the network side device to quickly restore communication with the terminal, the network side device needs to store the context information of the terminal even though the terminal enters the ECM-IDLE state. However, with development of Internet of Things technologies, a quantity of terminals grows exponentially. The network side device has limited storage space, and the network side device may reject attachment of a terminal due to insufficient storage space. Consequently, the terminal cannot normally access the network.

Further, prior art document S3-160157, 3GPP TSG-SA WG3 Meeting #82, 1.- 5- February 2016 refers to a discussion on security issues for RRC Connection Suspend and Resume procdure in solution 18 for narrow band CloT.

The document US 2016/0127894 A1 shows a communication system and method using connectionless wireless access.

### SUMMARY

To resolve the problem in the prior art, embodiments of the present invention provide a communication method, an apparatus, and a system. This problem is solved by the subject matter of the independent claims. Further implementation forms are provided in the dependent claims. Embodiments labelled as inventive embodiments in the following, which are not covered by the scope of protection defined by the independent claims, are to be understood as examples helpful for understanding the invention, but not as embodiments of the invention.

The technical solutions are as follows.

According to a first aspect, a communication method is provided. The method includes:
receiving, by a first network side device, a first message sent by a terminal, where the first message carries ciphertext of context information of the terminal, and the ciphertext of the context information is information obtained by encrypting the context information of the terminal; obtaining, by the first network side device, a first key, and decrypting the ciphertext of the context information based on the first key, to obtain the context information; and establishing, by the first network side device, a communication connection for the terminal based on the context information.

The first network side device is any network side device on a network side of a mobile communications network architecture, for example, an MME or a base station.

According to the solution shown in this embodiment of the present invention, the first network side device receives the first message sent by the terminal when the terminal receives a paging message used to page the terminal or when the terminal detects a to-be-sent uplink message. The first network side device may decrypt, by using the first key, the ciphertext that is of the context information of the terminal and that is carried in the first message, to obtain the context information of the terminal, and then establishes the communication connection for the terminal.

In a possible implementation, the first network side device encrypts the context information of the terminal based on the first key, to obtain the ciphertext of the context information of the terminal; and the first network side device sends a second message to the terminal, where the second message carries the ciphertext of the context information of the terminal.

According to the solution shown in this embodiment of the present invention, before establishing the communication connection, the terminal sends a service request to the first network side device. After detecting the service request, the first network side device may encrypt the context information of the terminal, to obtain the ciphertext of the context information of the terminal, and then send, to the terminal, the second message carrying the ciphertext of the context information of the terminal.

In a possible implementation, before the sending, by the first network side device, a second message to the terminal, the first network side device encrypts the first key based on a second key, to obtain ciphertext of the first key, where the second message further carries the ciphertext of the first key; and the first message further carrying the ciphertext of the first key, the first network side device decrypts the ciphertext of the first key in the first message based on the second key, to obtain the first key.

The second key may be randomly generated by the first network side device based on a pseudo-random number generation algorithm. In this case, the second key is stored in the first network side device. It should be noted that, the second key in this case is a symmetric key, and a used encryption algorithm is a pre-configured symmetric encryption algorithm. Alternatively, the second key may be a public and private key pair pre-configured by the first network side device. In this case, the second key is stored in the first network side device. It should be noted that, the second key in this case is an asymmetric key, and a used encryption and decryption algorithm is an asymmetric encryption and decryption algorithm.

According to the solution shown in this embodiment of the present invention, the first network side device may further encrypt the first key based on the second key, to obtain the ciphertext of the first key. Likewise, after receiving the ciphertext of the first key in the first message sent by the terminal, the first network side device may decrypt the ciphertext of the first key in the first message based on the second key, to obtain the first key. In this way, security of the context information of the terminal is higher.

In a possible implementation, the method further includes: generating, by the first network side device, signature information based on a third key, the ciphertext of the context information of the terminal, and the ciphertext of the first key, where the second message further carries the signature information. The first message further carries the signature information, and before the decrypting, by the first network side device, the ciphertext of the first key in the first message based on the second key, to obtain the first key, the first network side device verifies the signature information in the first message based on the third key and based on the ciphertext of the context information of the terminal and the ciphertext of the first key that are in the first message; and if the verification on the signature information in the first message succeeds, decrypts the ciphertext of the first key in the first message based on the second key, to obtain the first key.

The third key may be a symmetric key or an asymmetric key.

According to the solution shown in this embodiment of the present invention, the first network side device may sign the ciphertext of the context information of the terminal and the ciphertext of the first key by using the third key, to generate the signature information. Likewise, the first network side device adds the signature information to the second message. When receiving the first message sent by the terminal, the first network side device may sign the ciphertext of the context information of the terminal, the ciphertext of the first key, and the signature information by using the third key, to generate the signature information; and if the signature information is the same as the signature information in the first message, determine that the verification succeeds. The first network side device may decrypt the ciphertext of the first key in the first message based on the second key, to obtain the first key. In this way, security of the context information of the terminal is higher.

In a possible implementation, the first network side device signs the ciphertext of the context information of the terminal, validity time information corresponding to the context information of the terminal, and the ciphertext of the first key based on the third key, to generate the signature information, where the second message further carries the validity time information; and the first message further carries the validity time information, and the first network side device verifies the signature information based on the third key and based on the ciphertext of the context information of the terminal, the ciphertext of the first key, and the validity time information that are in the first message.

The validity time information may be an invalidity time point of the context information of the terminal, for example, 2017/1/10/24:00, may be a validity time range of the context information of the terminal, for example, 2017/1/10/24:00 - 2017/1/12/24:00, or may be a generation time point, validity duration, and the like of the context information of the terminal, for example, the generation time point being 2017/1/10/10:00, the validity duration being 72 hours, and the context information of the terminal becoming invalid at 2017/1/13/10:00.

According to the solution shown in this embodiment of the present invention, when generating the signature information, the first network side device may further use the validity time information corresponding to the context information of the terminal. Likewise, during signature verification, the validity time information carried in the first message may also be used. In this way, security of the context information of the terminal is higher.

In a possible implementation, the first network side device generates signature information based on a third key, the ciphertext of the context information of the terminal, the ciphertext of the first key, and a device identifier, where the second message further carries the device identifier and the signature information. The first message further carries the signature information and the device identifier, and before the decrypting, by the first network side device, the ciphertext of the first key in the first message based on the second key, to obtain the first key, the first network side device verifies the signature information in the first message based on the third key and based on the ciphertext of the context information of the terminal, the ciphertext of the first key, and the device identifier that are in the first message; and if the verification on the signature information in the first message succeeds, decrypts the ciphertext of the first key in the first message based on the second key, to obtain the first key.

The device identifier is a device identifier of the first network side device.

According to the solution shown in this embodiment of the present invention, when generating the signature information, the first network side device may further uses the device identifier of the first network side device. Likewise, during signature verification, the device identifier carried in the first message may also be used. In this way, security of the context information of the terminal is higher.

In a possible implementation, the method further includes: the first message further carries ciphertext of the first key, signature information, and a device identifier, where the ciphertext of the first key is ciphertext obtained by a device, indicated by the device identifier, by encrypting the first key based on a second key, and the signature information is signature information generated by the device, indicated by the device identifier, based on a third key, the ciphertext of the context information of the terminal, the ciphertext of the first key, and the device identifier. If the device identifier is a device identifier of the first network side device, the first network side device verifies the signature information in the first message based on the third key and based on the ciphertext of the context information of the terminal, the ciphertext of the first key, and the device identifier that are in the first message; if the verification on the signature information in the first message succeeds, decrypts the ciphertext of the first key in the first message based on the second key, to obtain the first key; and decrypts the ciphertext of the context information based on the first key, to obtain the context information. If the device identifier is not the device identifier of the first network side device, the first network side device sends the first message to the device indicated by the device identifier, and receives the context information sent by the device indicated by the device identifier.

According to the solution shown in this embodiment of the present invention, the first network side device may determine, based on the device identifier carried in the first message, whether network side device switching occurs; if no switching occurs, may directly verify a signature; and then perform decryption to obtain the context information of the terminal. The ciphertext of the context information of the terminal can be decrypted only by a network side device generating the context information of the terminal. Therefore, after the network side device is switched, a new network side device needs to send the first message to the original network side device. After receiving the first message, the original network side device may verify a signature, then perform decryption to obtain decrypted context information of the terminal, and send the decrypted context information of the terminal to the new network side device.

In a possible implementation, the method further includes: deleting, by the first network side device, the context information of the terminal after it is detected that the terminal enters a registration idle ECM-IDLE state.

According to a second aspect, a communication method is provided. The method includes:
obtaining, by a terminal, ciphertext of context information of the terminal when the terminal receives a paging message used to page the terminal or when the terminal detects a to-be-sent uplink message; and sending, by the terminal, a first message to a first network side device, where the first message carries the ciphertext of the context information of the terminal.

In a possible implementation, the method further includes: receiving, by the terminal, a second message sent by the first network side device or a second network side device, where the second message carries the ciphertext of the context information of the terminal; and storing, by the terminal, the ciphertext of the context information of the terminal.

According to the solution shown in this embodiment of the present invention, network side device switching occurs, where the second network side device is a network side device before the switching, and the first network side device is a network side device after the switching. The second message is sent by the second network side device before the terminal sends the first message to the first network side device, and the second message is sent by the first network side device after the terminal sends the second message to the first network side device.

In a possible implementation, the first message and the second message further carry ciphertext of a first key.

In a possible implementation, the first message and the second message further carry signature information.

In a possible implementation, the first message and the second message further carry validity time information corresponding to the context information of the terminal and a device identifier of a network side device sending the second message.

According to a third aspect, a network side device is provided. The network side device includes a receiver, a transmitter, and a processor. The processor executes an instruction to implement the communication method according to the first aspect.

According to a fourth aspect, a terminal is provided. The terminal includes a receiver, a transmitter, a processor, and a memory. The processor executes an instruction to implement the communication method according to the second aspect.

According to a fifth aspect, a network side device is provided. The network side device includes at least one module. The at least one module is configured to perform the communication method according to the first aspect.

According to a sixth aspect, a terminal is provided. The terminal includes at least one module. The at least one module is configured to perform the communication method according to the second aspect.

According to a seventh aspect, a communications system is provided. The system includes: a network side device, for example, the network side device according to the third aspect, and a terminal, for example, the terminal according to the fourth aspect.

According to an eighth aspect, a computer program product including an instruction is provided. When the instruction is run on a network side device, the network side device performs the communication method according to the first aspect.

According to a ninth aspect, a computer program product including an instruction is provided. When the instruction is run on a terminal, the terminal performs the communication method according to the second aspect.

Technical effects obtained in the third to the ninth aspects in the embodiments of the present invention are similar to those obtained by using the technical means corresponding to the first aspect and the second aspect, and details are not described herein again.

The technical solutions provided by the embodiments of the present invention have the following beneficial effects:
In the embodiments of the present invention, context information of a terminal is stored in the terminal, when a network side device uses the context information of the terminal, the terminal sends the context information of the terminal to the network side device. In this way, the network side device does not need to store the context information of the terminal, thereby saving storage space of the network side device. The network side device can enable more new terminals to be attached and enable more terminals to access a network.

### BRIEF DESCRIPTION OF DRAWINGS

FIG. 1 is a schematic structural diagram of a communications system according to an embodiment of the present invention;
FIG. 2 is a schematic structural diagram of a first network side device according to an embodiment of the present invention;
FIG. 3 is a schematic structural diagram of a terminal according to an embodiment of the present invention;
FIG. 4 is a schematic signaling diagram of a communication method according to an embodiment of the present invention;
FIG. 5 is a schematic signaling diagram of a communication method according to an embodiment of the present invention;
FIG. 6A and FIG. 6B are a schematic signaling diagram of a communication method according to an embodiment of the present invention;
FIG. 7 is a schematic structural diagram of a network side device according to an embodiment of the present invention;
FIG. 8 is a schematic structural diagram of a network side device according to an embodiment of the present invention;
FIG. 9 is a schematic structural diagram of a network side device according to an embodiment of the present invention;
FIG. 10 is a schematic structural diagram of a network side device according to an embodiment of the present invention;
FIG. 11 is a schematic structural diagram of a network side device according to an embodiment of the present invention;
FIG. 12 is a schematic structural diagram of a network side device according to an embodiment of the present invention;
FIG. 13 is a schematic structural diagram of a terminal according to an embodiment of the present invention; and
FIG. 14 is a schematic structural diagram of a terminal according to an embodiment of the present invention.

### DESCRIPTION OF EMBODIMENTS

To make the objectives, technical solutions, and advantages of this application clearer, the following further describes the implementations of the present invention in detail with reference to the accompanying drawings.

To facilitate understanding of the embodiments of the present invention, the following first describes a system architecture used in the embodiments of the present invention.

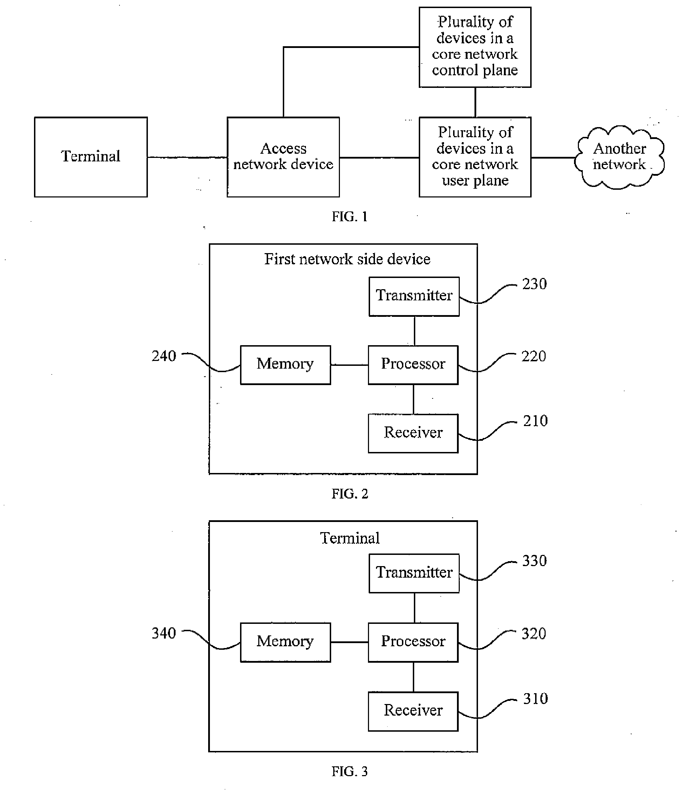

The embodiments of the present invention may be applied to a mobile communications network architecture, for example, 4G or 5G. As shown in FIG. 1, the mobile communications network architecture includes a plurality of network elements. The network elements include a plurality of terminal, a plurality of access network devices, a plurality of devices in a core network control plane and a plurality of devices in a core network user plane. The access network device may be a base station, a next-generation NodeB (Next Generation NodeB, gNB), or the like. The plurality of devices in the core network control plane may include an MME, an access and mobility management function (Access and Mobility Management Function, AMF) entity, a session management function (Session Management Function, SMF) entity, and the like. The plurality of devices in the core network user plane may include an SGW, a PGW, a user plane function (User Plane Function, UPF) entity, and the like. Each of the plurality of access network devices, the plurality of devices in the core network control plane and the plurality of devices in the core network user plane may be referred to as a network side device.

An embodiment of the present invention provides a communication method. The method may be applied to the foregoing mobile communications architecture, including a terminal and a first network side device. The first network side device is any network side device in the plurality of access network devices, the plurality of devices in the core network control plane, and the plurality of devices in the core network user plane in the mobile communications network architecture.

The first network side device may include a receiver 210, a processor 220, a transmitter 230, and a memory 240, as shown in FIG. 2. The receiver 210, the transmitter 230, and the memory 240 may all be connected to the processor 220. The receiver 210 may be configured to receive a first message and the like. The transmitter 230 may be configured to send a second message and the like. The memory 240 may be configured to store context information of the terminal and data that is required in a communication connection establishment process. The processor 220 may be a control center of the first network side device, and use various interfaces and lines to connect various parts of the entire first network side device, for example, the receiver 210 and the transmitter 230. In this embodiment of the present invention, the processor 220 may be configured to perform related processing of establishing a communication connection for the terminal. Optionally, the processor 220 may include one or more processing units.

The terminal may include a receiver 310, a processor 320, a transmitter 330, and a memory 340, as shown in FIG. 3. The receiver 310, the transmitter 330, and the memory 340 may all be connected to the processor 320. The receiver 310 may be configured to receive the second message and the like. The processor 320 may be a control center of the terminal. The transmitter 330 may be configured to send the first message and the like. The memory 340 may be configured to store the context information of the terminal and the data that is required in the communication connection establishment process. In this embodiment of the present invention, the processor 320 may be configured to perform generating related processing of obtaining the prestored context information of the terminal. Optionally, the processor 320 may include one or more processing units.

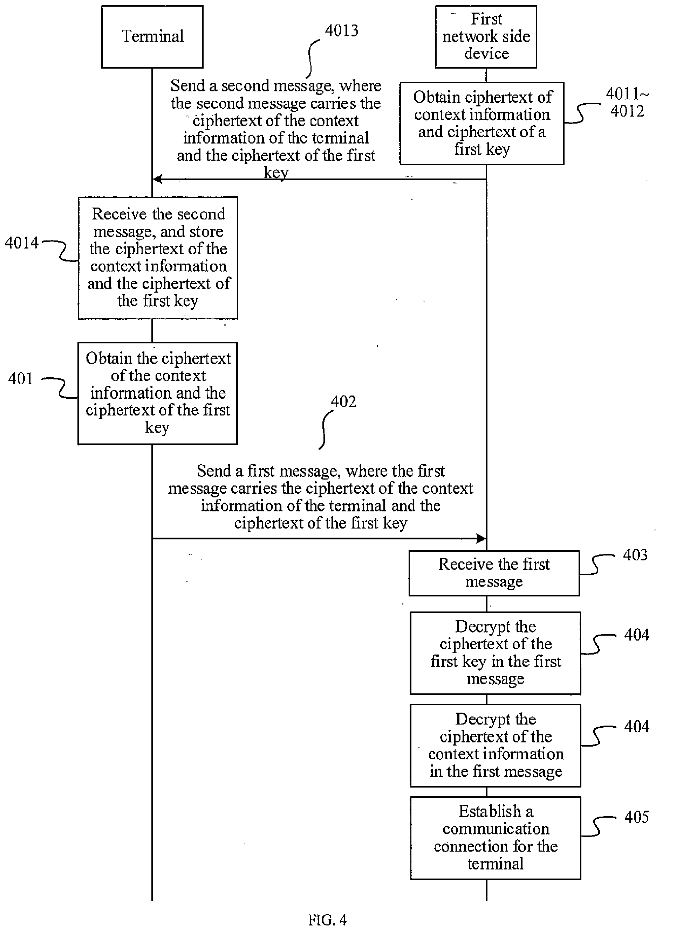

As shown in FIG. 4, a processing procedure of the method may include the following steps.

Step 401: Obtain ciphertext of the context information of the terminal when the terminal receives a paging message used to page the terminal or when the terminal detects a to-be-sent uplink message.

The context information of the terminal may be a part of all context information of the terminal. For example, the context information of the terminal may include connectivity context information, security context information, charging context information, and the like. The connectivity context information includes an eNB UE S1AP ID and the like, used to identify various connections between a base station and a core network device. The security context information includes a non-access stratum key (Non-Access Stratum, NAS key) and the like, used for secure communication between the terminal and the core network device. The charging context information includes an access point name aggregate maximum bit rate (Access Point Name Aggregated Maximum Bit Rate, APN-AMBR) and the like, used to identify quality of service of the terminal and the like.

During implementation, the first network side device stores mobility context information in the context information of the terminal. When needing to page a terminal, the first network side device finds out a position of the terminal by using the mobility context information in the context information of the terminal. For example, the core network device sends, based on a tracking area list (Tracking Area List), a paging message to all identified base stations in the tracking area list. The base station sends the paging message to the terminal based on a cell in a tracking area identified by a list of tracking area identifiers (List of TAIs).

In an example, after the terminal receives a paging message, before a user-plane radio bearer between the terminal and the base station is established, for example, before the user-plane radio bearer is established by using a service request (Service Request, SR), the terminal obtains the ciphertext of the prestored context information of the terminal. Alternatively, when the terminal has a to-be-sent uplink message, before a user-plane radio bearer between the terminal and the base station is established, for example, before the user-plane radio bearer is established by using a service request, the terminal obtains the ciphertext of the prestored context information of the terminal.

It should be noted that on different network side devices, context information of a same terminal may be different. The context information of the terminal mentioned in this embodiment of the present invention may be found in Table 5.7.2 in the 3GPP TS23.401 standard, but is not limited thereto.

Step 402: The terminal sends the first message to the first network side device, where the first message carries the ciphertext of the context information of the terminal.

The ciphertext of the context information is information obtained by encrypting the context information of the terminal.

During implementation, after obtaining the ciphertext of the prestored context information of the terminal, the terminal may send the first message to the first network side device, and add the ciphertext of the context information of the terminal to the first message.

The first message may be an existing signaling message or a newly added message. This is not limited.

Step 403: The first network side device receives the first message sent by the terminal.

Step 404: The first network side device obtains a first key, and decrypts the ciphertext of the context information based on the first key, to obtain the context information.

The first key is a key used when the first network side device encrypts the context information of the terminal, or may be a private key corresponding to a public key used when the first network side device encrypts the context information of the terminal.

In an example, the first network side device randomly generates the first key based on a pseudo-random number generation algorithm. The pseudo-random number generation algorithm may be any existing algorithm, for example, a Monte-Carlo (Monte-Carlo) method. Alternatively, the first network side device may derive the first key based on a prestored key, for example, KASME.

During implementation, the first network side device may obtain a prestored first key, and then decrypt the ciphertext of the context information of the terminal by using the first key, to obtain the context information of the terminal.

Step 405: The first network side device establishes a communication connection for the terminal based on the context information.

Specifically, in step S405, the first network side device configures a resource for the terminal based on the context information of the terminal, for example, establishes a user plane bearer and a signaling plane bearer such as a signaling radio bearer (signaling radio bearer, SRB), a data bearer (Data Resource Bearer, DRB), S1, and S3/S5 based on the context information of the terminal, thereby restoring communication between the terminal and the first network side device.

In an example, it is assumed that the first network side device is an SGW, and the context information includes a PGW tunnel identifier for S5/S8 (PGW TEID for S5/S8), an SGW tunnel identifier for S5/S8 (SGW TEID for S5/S8), an SGW IP address in current use (SGW Address in Use), and a PGW IP address in current use (PGW Address in Use). The SGW may send data to the PGW by using the PGW TEID and the PGW IP address, to establish an S5 bearer between the SGW and the PGW.

In addition, after step 405, the first network side device may obtain the context information of the terminal, encrypt the context information of the terminal to obtain the ciphertext of the context information of the terminal, and then send the ciphertext of the context information of the terminal to the terminal.

As shown in FIG. 4, before the first network side device receives the first message sent by the terminal, the method may further include: sending the second message to the terminal, where the second message may carry the ciphertext of the context information of the terminal. Further, the second message may further carry ciphertext of the first key. Corresponding processing steps are as follows:
Step 4011: The first network side device encrypts the context information of the terminal based on the first key, to obtain the ciphertext of the context information of the terminal.

The first key may be randomly generated by the first network side device based on the pseudo-random number generation algorithm. The pseudo-random number generation algorithm may be any existing algorithm, for example, a Monte-Carlo (Monte-Carlo) method. Alternatively, the first key may be derived based on a prestored key, for example, KASME.

During implementation, the first network side device may symmetrically encrypt the context information of the terminal based on an encryption algorithm by using the first key, to obtain the ciphertext of the context information of the terminal. The first network side device may send, to the terminal, the second message carrying the ciphertext of the context information of the terminal.

Optionally, after determining a service request from the terminal, the first network side device may encrypt the context information of the terminal based on the first key, to obtain the ciphertext of the context information of the terminal.

For example, the first network side device is a base station. After sending an initial context information establishment message to an MME, the base station determines that the terminal receives a service request. For example, the first network side device is an MME. When receiving a modify bearer response message sent by an S-GW, the MME determines that the terminal receives a service request. For example, the first network side device is an S-GW. When receiving a modify bearer response message sent by an MME, the S-GW determines that the terminal receives a service request. After determining that the terminal receives the service request, the first network side device may encrypt the context information of the terminal based on the first key, to obtain the ciphertext of the context information of the terminal.

It should be noted that on different network side devices, context information corresponding to a same terminal may be different.

The foregoing mentioned encryption algorithm may be an algorithm identified by using a non-access stratum algorithm (Selected NAS Algorithm) in the context information of the terminal.

Optionally, the second message further carries the ciphertext of the first key. Corresponding processing may be as follows:
Step 4012: The first network side device encrypts the first key based on the second key and a pre-configured encryption algorithm, to obtain the ciphertext of the first key.

During implementation, the pre-configured encryption algorithm may an evolved encryption algorithm (Evolved Encryption Algorithm, EEA), for example, an EEA 0, an EEA 1, or an EEA 2. The pre-configured encryption algorithm corresponds to a pre-configured decryption algorithm.

In an example, the second key may be randomly generated by the first network side device based on a pseudo-random number generation algorithm. In this case, the second key is stored in the first network side device. The pseudo-random number generation algorithm may be any existing algorithm, for example, a Monte-Carlo (Monte-Carlo) method. It should be noted that, the second key in this case is a symmetric key, a used encryption algorithm is a pre-configured symmetric encryption algorithm, and a used decryption algorithm corresponds to the used encryption algorithm.

In another example, the second key may be a public and private key pair pre-configured by the first network side device. In this case, the second key is stored in the first network side device. During encryption, a public key of the first network side device is used as an encryption key, and during decryption, a private key of the first network side device is used as a decryption key. It should be noted that, the second key in this case is an asymmetric key. A used encryption algorithm is an asymmetric encryption algorithm, where an elliptic curve cryptosystem (Elliptic Curve Cryptosystem, ECC) algorithm, a public key infrastructure (Public Key Infrastructure, PKI) mechanism, or an identity-based encryption (Identity-based Encryption, IBE) algorithm mechanism may be used. A used decryption algorithm corresponds to the used encryption algorithm.

Step 4013: The first network side device sends the second message to the terminal, where the second message carries the ciphertext of the context information of the terminal.

Optionally, the second message may further carry the ciphertext of the first key. In addition, the second message may be a signaling message in an existing communication procedure or a newly added signaling message.

Step 4014: The terminal receives the second message sent by the first network side device, where the second message carries the ciphertext of the context information of the terminal, and the terminal stores the ciphertext of the context information of the terminal that is carried in the second message.

During implementation, when receiving the second message sent by the first network side device, the terminal may parse the second message, obtain the ciphertext of the context information of the terminal from the second message, and then store the ciphertext of the context information of the terminal.

Optionally, the second message further carries the ciphertext of the first key. Corresponding processing may be as follows:
When receiving the second message, the terminal may further store the ciphertext of the first key that is carried in the second message.

Correspondingly, for the ciphertext of the context information of the terminal and the ciphertext of the first key that are carried in the second message, the first message also carries the ciphertext of the context information of the terminal and the ciphertext of the first key. In step 401, in addition to obtaining the ciphertext of the context information of the terminal, the terminal further obtains the ciphertext of the first key. In step 402 and step 403, the first message sent by the terminal to the first network side device further carries the ciphertext of the first key. In step 404, the first network side device first decrypts the ciphertext of the first key based on the second key and the pre-configured decryption algorithm, to obtain the first key.

During implementation, the first network side device may decrypt the ciphertext of the first key in the first message based on the pre-configured decryption algorithm and the second key that is generated by using a prestored pseudo-random number, to obtain the first key; or decrypt the ciphertext of the first key in the first message based on the pre-configured decryption algorithm and the private key in the prestored second key, to obtain the first key.

Optionally, in this embodiment of the present invention, a process may further be provided in which the first network side device may delete the context information of the terminal when a state of the terminal satisfies a preset condition. Corresponding processing may be as follows: When detecting that the terminal enters a registration idle ECM-IDLE state, the first network side device deletes the context information of the terminal.

During implementation, the first network side device may delete the context information of the terminal when detecting that the state of the terminal satisfies the preset condition. For example, when determining that there is no NAS signaling connection between the terminal and the network, the first network side device determines that the terminal enters the ECM-IDLE state, and the first network side device may delete the context information of the terminal.

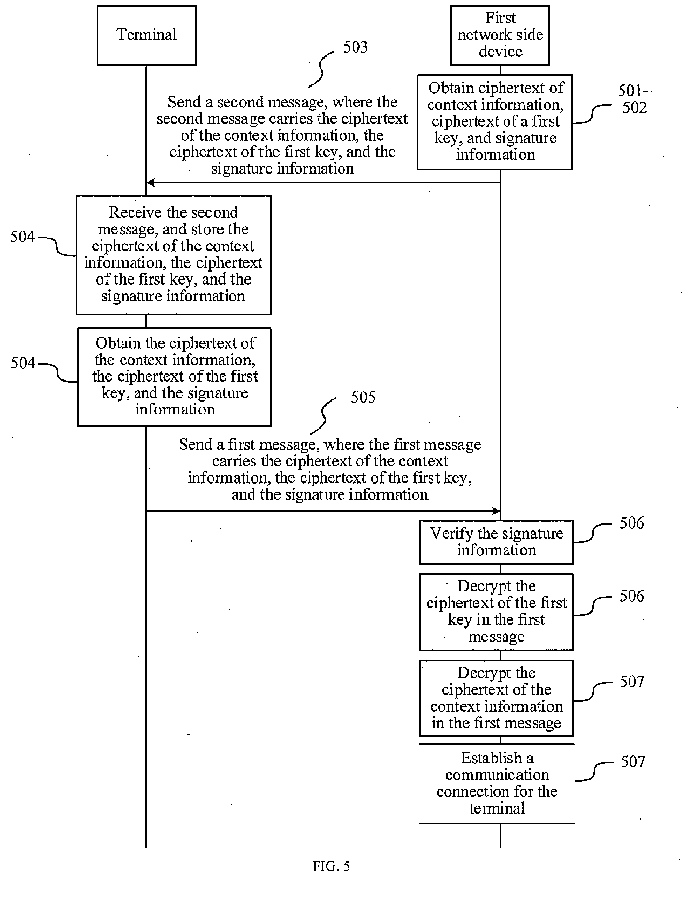

In another embodiment of the present invention, a communication method is further provided. As shown in FIG. 5, a processing procedure may be as follows:
Step 501: A first network side device obtains context information of a terminal; obtains a first key, and encrypts the context information of the terminal based on the first key, to obtain ciphertext of the context information of the terminal; and encrypts the first key based on a second key, to obtain ciphertext of the first key, where a second message further carries the ciphertext of the first key.

Processing of this step has been described in detail above, and details are not described herein again.

Step 502: The first network side device generates signature information based on a third key, the ciphertext of the context information of the terminal, and the ciphertext of the first key.

The third key may be randomly generated by the first network side device based on a pseudo-random number generation algorithm. In this case, the third key may be stored in the first network side device. The pseudo-random number generation algorithm may be any existing algorithm, for example, a Monte-Carlo (Monte-Carlo) method. The third key in this case is a symmetric key, and a used signature algorithm is a pre-configured symmetric signature algorithm.

In addition, the third key may alternatively be a public and private key pair pre-configured by the first network side device. In this case, the third key is stored in the first network side device. During signature generation, a private key of the first network side device is used as a signature key. During signature authentication, a public key of the first network side device is used as a key for the signature authentication. The third key in this case is an asymmetric key. A used signature algorithm is an asymmetric signature algorithm, where a signature generation and authentication algorithm based on an elliptic curve, a signature generation and authentication algorithm based on a public key infrastructure mechanism, or a signature generation and authentication algorithm based on an identity-based encryption algorithm mechanism may be used. When both the second key and the third key are asymmetric keys, the two keys may be a same public and private key pair.

During implementation, the first network side device may obtain the third key by using the foregoing method, and then sign the ciphertext of the context information of the terminal and the ciphertext of the first key based on the third key and a preset signature generation algorithm in an encrypted manner, to generate the signature information. For example, the third key is an asymmetric key. The first network side device may perform a hash operation on the ciphertext of the context information of the terminal and the ciphertext of the first key, and finally use a private key in the third key to perform signature generation processing on data obtained through the hashing, to generate the signature information. For example, the third key is a symmetric key. The first network side device may perform a hash operation on the ciphertext of the context information of the terminal and the ciphertext of the first key, and finally use the third key to perform signature generation processing on data obtained through the hashing, to generate the signature information.

Optionally, when generating the signature information, the first network side device may further use validity time information of the context information of the terminal. Corresponding processing may be as follows:
The first network side device signs the ciphertext of the context information of the terminal, the validity time information corresponding to the context information of the terminal, and the ciphertext of the first key based on the third key, to generate the signature information.

The validity time information may be an invalidity time point of the context information of the terminal, for example, 2017/1/10/24:00, may be a validity time range of the context information of the terminal, for example, 2017/1/10/24:00 - 2017/1/12/24:00, or may be a generation time point, validity duration, and the like of the context information of the terminal, for example, the generation time point being 2017/1/10/10:00, the validity duration being 72 hours, and the context information of the terminal becoming invalid at 2017/1/13/10:00.

During implementation, the first network side device may obtain the third key by using the foregoing method, and then sign the ciphertext of the context information of the terminal, the ciphertext of the first key, and the validity time information based on the third key and a preset signature generation algorithm in an encrypted manner, to generate the signature information. For example, the third key is an asymmetric key. The first network side device may perform a hash operation on the ciphertext of the context information of the terminal, the ciphertext of the first key, and the validity time information, and finally use a private key in the third key to perform signature generation processing on data obtained through the hashing, to generate the signature information. For example, the third key is a symmetric key. The first network side device may perform a hash operation on the ciphertext of the context information of the terminal, the ciphertext of the first key, and the validity time information, and finally use the third key to perform signature generation processing on data obtained through the hashing, to generate the signature information.

Optionally, when generating the signature information, the first network side device may further use a device identifier. Corresponding processing may be as follows:
The first network side device generates the signature information based on the third key, the ciphertext of the context information of the terminal, the ciphertext of the first key, and the device identifier.

The device identifier is a device identifier of the first network side device.

During implementation, the first network side device may obtain the prestored third key, and then sign the ciphertext of the context information of the terminal, the ciphertext of the first key, and the device identifier based on the third key and a preset signature generation algorithm in an encrypted manner, to generate the signature information.

Step 503: The first network side device sends the second message to the terminal, where the second message carries the ciphertext of the context information of the terminal, the ciphertext of the first key, and the signature information.

Optionally, the second message further carries the signature information and the validity time information of the context information of the terminal.

Optionally, the second message further carries the signature information and the device identifier.

Step 504: The terminal receives the second message sent by the first network side device, and stores the ciphertext of the context information of the terminal, the ciphertext of the first key, and the signature information that are carried in the second message. When the terminal receives a paging message used to page the terminal or when the terminal detects a to-be-sent uplink message, the terminal obtains the ciphertext of the context information of the terminal, the ciphertext of the first key, and the signature information that are prestored.

Optionally, when the terminal receives the paging message used to page the terminal or when the terminal detects the to-be-sent uplink message, the terminal further obtains the prestored validity time information of the context information of the terminal.

Optionally, when the terminal receives the paging message used to page the terminal or when the terminal detects the to-be-sent uplink message, the terminal further obtains the prestored device identifier.

Step 505: The terminal sends a first message to the first network side device, where the first message carries the ciphertext of the context information of the terminal, the ciphertext of the first key, and the signature information.

Correspondingly, the first network side device receives the first message sent by the terminal.

Optionally, the first message further carries the validity time information of the context information of the terminal.

Optionally, the first message further carries the device identifier.

It should be noted that if the first message carries the validity time information, the first network side device may determine whether the context information of the terminal in the first message becomes invalid. If the context information of the terminal in the first message becomes invalid, step 506 and step 507 are skipped. If the context information of the terminal in the first message does not become invalid, step 506 and step 507 continue to be performed. For example, the validity time information may be an invalidity time point of the context information of the terminal. If a current time point has exceeded the invalidity time point, it is determined that the first message becomes invalid.

Step 506: The first network side device verifies the signature information in the first message based on the third key and based on the ciphertext of the context information of the terminal and the ciphertext of the first key that are in the first message; and if the verification on the signature information in the first message succeeds, decrypts the ciphertext of the first key in the first message based on the second key, to obtain the first key.

In an example, the third key is an asymmetric key. The first network side device may perform a hash operation on the ciphertext the context information of the terminal and the ciphertext of the first key that are in the first message, and then use a public key in the third key to perform signature generation processing on data obtained through the hashing, to generate the signature information. If the signature information is the same as the signature information in the first message, it is determined that the verification on the signature information in the first message succeeds. Then, the first network side device may obtain the prestored second key and a pre-configured decryption algorithm, and decrypt the ciphertext of the first key in the first message, to obtain the first key.

In another example, the third key is a symmetric key. The first network side device may perform a hash operation on the ciphertext the context information of the terminal and the ciphertext of the first key that are in the first message, and then use the third key to perform signature generation processing on data obtained through the hashing, to generate the signature information. If the signature information is the same as the signature information in the first message, it is determined that the verification on the signature information in the first message succeeds. Then, the first network side device may obtain the prestored second key and a pre-configured decryption algorithm, and decrypt the ciphertext of the first key in the first message, to obtain the first key.

Optionally, when verifying the signature information, the first network side device may further use the validity time information of the context information of the terminal. Processing of step 506 may be as follows:
The first network side device signs the ciphertext of the context information of the terminal, the validity time information corresponding to the context information of the terminal, and the ciphertext of the first key based on the third key, to generate the signature information. The first network side device verifies the signature information based on the third key and based on the ciphertext of the context information of the terminal, the ciphertext of the first key, and the validity time information that are in the first message. If the verification on the signature information in the first message succeeds, the first network side device decrypts the ciphertext of the first key in the first message based on the second key, to obtain the first key.

During implementation, processing of this step is the same as a processing process of verifying, by the first network side device, a signature for the ciphertext of the context information of the terminal, the ciphertext of the first key, and the signature information that are in the first message, and details are not described herein again.

Optionally, when verifying the signature information, the first network side device may further use the device identifier in the first message. Processing of step 506 may be as follows:
The first network side device verifies the signature information in the first message based on the third key and based on the ciphertext of the context information of the terminal, the ciphertext of the first key, and the device identifier that are in the first message. If the verification on the signature information in the first message succeeds, the first network side device decrypts the ciphertext of the first key in the first message based on the second key, to obtain the first key.

During implementation, processing of this step is the same as the processing process of verifying, by the first network side device, a signature for the ciphertext of the context information of the terminal, the ciphertext of the first key, and the signature information that are in the first message, and details are not described herein again.

Step 507: The first network side device obtains the first key, decrypts the ciphertext of the context information based on the first key, to obtain the context information, and establishes a communication connection for the terminal based on the context information.

A processing process of step 507 has been described in step 404 and step 405, and details are not described herein again.

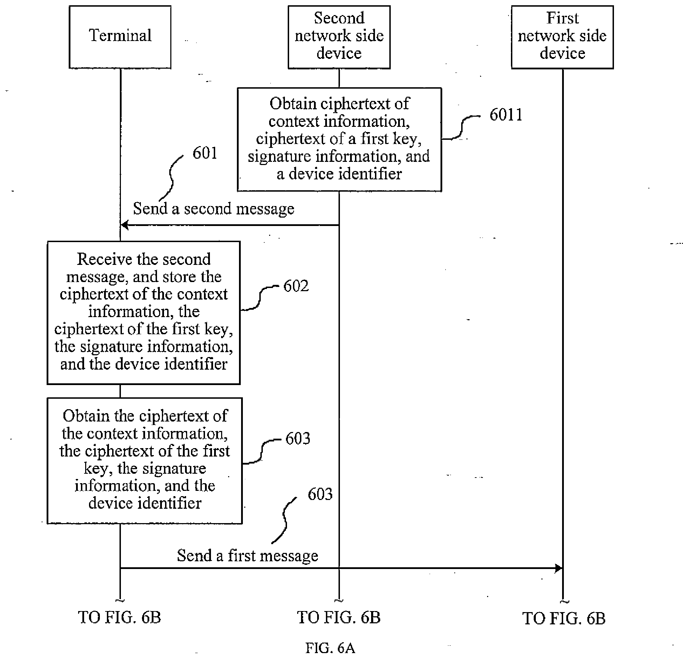

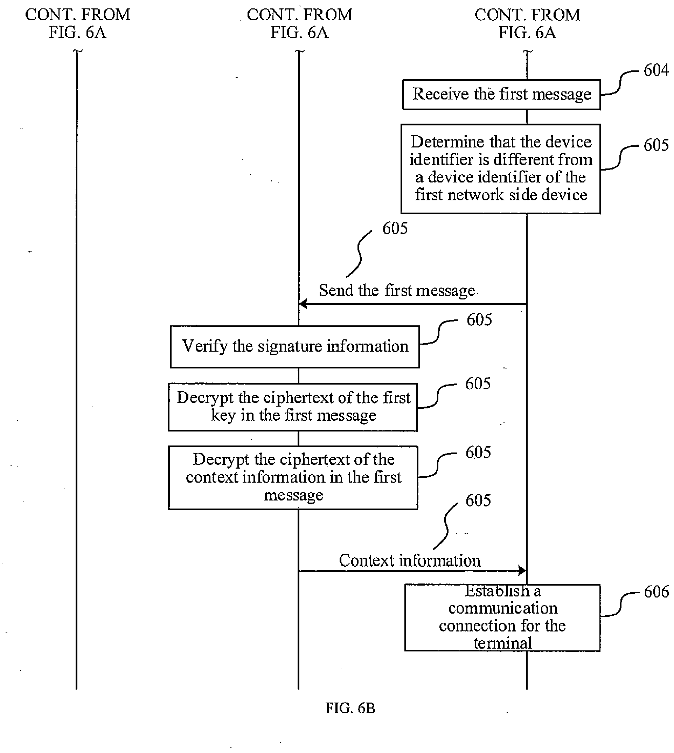

In another embodiment of the present invention, a communication method is further provided. This embodiment of the present invention is described by using an example in which a second network side device is switched to a first network side device. For the first network side device, refer to the foregoing content. The second network side device may be any network side device in the architecture shown in FIG. 1. As shown in FIG. 6A and FIG. 6B, a corresponding step processing procedure may be as follows:
Step 601: The second network side device sends a second message to a terminal.

The second message carries ciphertext of context information of the terminal, ciphertext of a first key, signature information, and a device identifier.

The ciphertext of the first key may be ciphertext obtained by encrypting the first key based on a second key by a device indicated by the device identifier. The signature information may be signature information generated by the device, indicated by the device identifier, based on a third key, the ciphertext of the context information of the terminal, the ciphertext of the first key, and the device identifier. Herein, the device indicated by the device identifier is the second network side device.

Before step 601, step 6011 may include: encrypting, by the second network side device, the context information of the terminal; encrypting, by the second network side device, the first key; and generating, by the second network side device, the signature information. Methods for encrypting the context information of the terminal and the first key and a method for generating the signature information have been described in detail above, and details are not described herein again.

Step 602: When receiving the second message sent by the second network side device, the terminal stores the ciphertext of the context information of the terminal, the ciphertext of the first key, the signature information, and the device identifier that are carried in the second message.

Step 603: When the terminal receives a paging message used to page the terminal or when the terminal detects a to-be-sent uplink message, the terminal obtains the ciphertext of the context information of the terminal, the ciphertext of the first key, the signature information, and the device identifier that are prestored, and sends a first message to the first network side device.

The first message carries the ciphertext of the context information of the terminal, the ciphertext of the first key, the signature information, and the device identifier.

During implementation, when the terminal receives the paging message that is sent by the first network side device and that is used to page the terminal or when the terminal detects the to-be-sent uplink message, the terminal may obtain the ciphertext of the context information of the terminal, the ciphertext of the first key, the signature information, and the device identifier that are prestored, and then send the first message to the first network side device.

Step 604: The first network side device receives the first message sent by the terminal.

Step 605: If the device identifier is not a device identifier of the first network side device, the first network side device sends the first message to the device indicated by the device identifier, and receives the context information sent by the device indicated by the device identifier.

In an example, after receiving the first message sent by the terminal, the first network side device may obtain the device identifier of the first network side device, and then determine whether the device identifier of the first network side device is the same as the device identifier in the first message. If the device identifier of the first network side device is different from the device identifier in the first message, the first network side device may send the first message to the device (where herein, the device is the second network side device) indicated by the device identifier in the first message. After receiving the first message, the second network side device may verify a signature for the ciphertext of the context information of the terminal, the ciphertext of the first key, the device identifier, and the signature information that are in the first message based on the third key; if the verification succeeds, decrypt the ciphertext of the first key in the first message based on the second key and a pre-configured decryption algorithm, to obtain the first key; and decrypt the ciphertext of the context information of the terminal in the first message based on the first key and the pre-configured decryption algorithm, to obtain decrypted context information of the terminal. This processing process is the same as the processing process in the embodiment shown in FIG. 5, and details are not described herein again. Then, the second network side device sends the decrypted context information of the terminal to the first network side device. The first network side device receives the decrypted context information of the terminal.

In another example, after receiving the first message sent by the terminal, the first network side device may determine whether the device indicated by the device identifier is the first network side device; and if the device indicated by the device identifier is not the first network side device, sends the first message to the device indicated by the device identifier. Subsequent operations are the same as those in the foregoing example, and details are not described again.

Step 606: Establish a communication connection for the terminal based on the context information of the terminal.

It should be noted that in step 605 and step 606, a signature verification method and a method for communicating with the terminal has been described in detail in the embodiments shown in FIG. 4 and FIG. 5, and details are not described herein again.

It should be noted that FIG. 6A and FIG. 6B show only a processing process of establishing the communication connection for the terminal after network side device switching occurs (the second network side device is switched to the first network side device).

In addition, if no network side device switching occurs, it indicates that the network side device sending the second message to the terminal is not switched, and the device identifier is the device identifier of the second network side device. The first network side device may verify a signature for the ciphertext of the context information of the terminal, the ciphertext of the first key, the signature information, and the device identifier based on the third key; if the verification succeeds, decrypt the ciphertext of the first key based on the second key, to obtain the first key; and decrypt the ciphertext of the context information of the terminal based on the first key, to obtain decrypted context information of the terminal. This processing process is the same as the processing process in the embodiment shown in FIG. 5, and details are not described herein again.

In addition, it should be noted that the first message and the second message may alternatively carry only the ciphertext of the context information of the terminal and the device identifier. Correspondingly, in step 605, the second network side device can obtain decrypted context information of the terminal only by decrypting the ciphertext of the context information of the terminal. Alternatively, the first message and the second message may carry only the ciphertext of the context information of the terminal, the ciphertext of the first key, and the device identifier. Correspondingly, in step 605, the second network side device first needs to decrypt the ciphertext of the first key to obtain the first key, and then decrypt the ciphertext of the context information of the terminal by using the first key, to obtain decrypted context information of the terminal.

It should be noted that in the embodiments shown in FIG. 4 and FIG. 5, no network side device switching occurs. The second message is sent by the first network side device to the terminal. The first network side device receives the first message sent by the terminal. After receiving the first message, the first network side device may decrypt the ciphertext of the context information of the terminal, to obtain the context information of the terminal. In addition, only the sending, by the first network side device, the second message to the terminal before receiving the first message is described in the embodiments shown in FIG. 4 and FIG. 5. Alternatively, the first network side device may send the second message to the terminal after establishing the communication connection for the terminal.

In the embodiment shown in FIG. 6A and FIG. 6B, the network side device switching occurs. The second network side device is switched to the first network side device. The second message is sent by the second network side device to the terminal. The terminal sends the first message to the switched-to first network side device. After receiving the first message sent by the terminal, the first network side device sends the first message to the second network side device. The second network side device decrypts the ciphertext of the context information of the terminal, to obtain the context information of the terminal, and then sends the context information of the terminal to the first network side device, so that the first network side device obtains the context information of the terminal.

In this embodiment of the present invention, context information of a terminal is stored in the terminal, when a network side device uses the context information of the terminal, the terminal sends the context information of the terminal to the network side device. In this way, the network side device does not need to store the context information of the terminal, thereby saving storage space of the network side device. The network side device can enable more new terminals to be attached and enable more terminals to access a network.

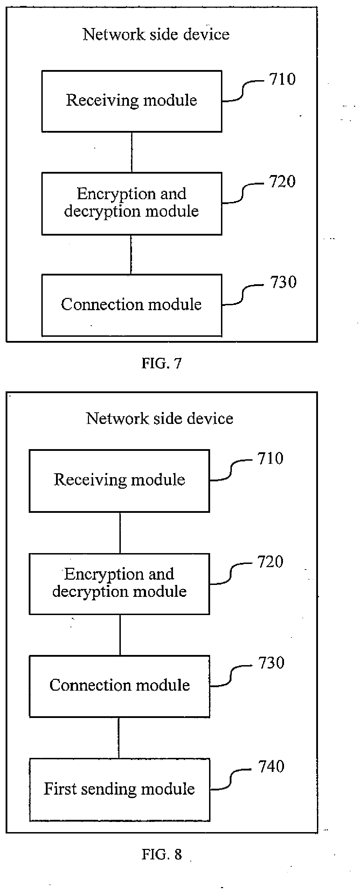

FIG. 7 is a structural diagram of a network side device according to an embodiment of the present invention. The apparatus may be implemented as a part or a whole through software, hardware, or a combination thereof. The network side device provided in this embodiment of the present invention can implement the procedures described in FIG. 4 to FIG. 6A and FIG. 6B in the embodiments of the present invention. The network side device includes a receiving module 710, an encryption and decryption module 720, and a connection module 730.

The receiving module 710 is configured to receive a first message sent by a terminal, where the first message carries ciphertext of context information of the terminal, and the ciphertext of the context information is information obtained by encrypting the context information of the terminal.

The encryption and decryption module 720 is configured to: obtain a first key, and decrypt the ciphertext of the context information based on the first key, to obtain the context information.

The connection module 730 is configured to establish a communication connection for the terminal based on the context information.

Optionally, the encryption and decryption module 720 is further configured to: encrypt the context information of the terminal based on the first key, to obtain the ciphertext of the context information of the terminal.

As shown in FIG. 8, the network side device further includes:
a first sending module 740, configured to send a second message to the terminal, where the second message carries the ciphertext of the context information of the terminal.

Optionally, the encryption and decryption module 720 is further configured to:
encrypt the first key based on a second key, to obtain ciphertext of the first key, where the second message further carries the ciphertext of the first key; and
the first message further carrying the ciphertext of the first key, decrypt the ciphertext of the first key in the first message based on the second key, to obtain the first key.

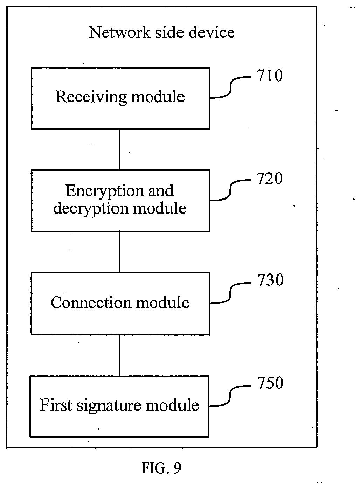

As shown in FIG. 9, optionally, the network side device further includes:
a first signature module 750, configured to generate signature information based on a third key, the ciphertext of the context information of the terminal, and the ciphertext of the first key, where the second message further carries the signature information.

The first message further carries the signature information. The first signature module 750 is further configured to:
verify the signature information in the first message based on the third key and based on the ciphertext of the context information of the terminal and the ciphertext of the first key that are in the first message.

The encryption and decryption module 720 is further configured to: if the verification on the signature information in the first message succeeds, decrypt the ciphertext of the first key in the first message based on the second key, to obtain the first key.

Optionally, the first signature module 750 is configured to:
sign the ciphertext of the context information of the terminal, validity time information corresponding to the context information of the terminal, and the ciphertext of the first key based on the third key, to generate the signature information, where the second message further carries the validity time information.

The first message further carries the validity time information. The first signature module 750 is further configured to:
verify the signature information based on the third key and based on the ciphertext of the context information of the terminal, the ciphertext of the first key, and the validity time information that are in the first message.

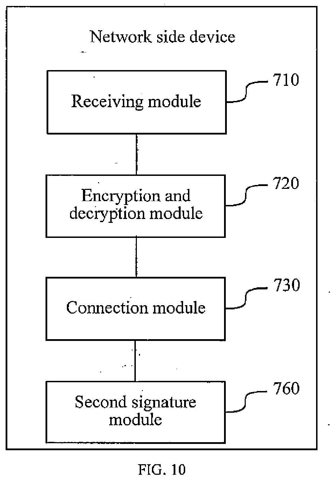

Optionally, as shown in FIG. 10, the network side device further includes:
a second signature module 760, configured to generate signature information based on a third key, the ciphertext of the context information of the terminal, the ciphertext of the first key, and a device identifier, where the second message further carries the device identifier and the signature information.

The first message further carries the signature information and the device identifier. The second signature module 760 is further configured to: verify the signature information in the first message based on the third key and based on the ciphertext of the context information of the terminal, the ciphertext of the first key, and the device identifier that are in the first message.

The encryption and decryption module 720 is further configured to: if the verification on the signature information in the first message succeeds, decrypt the ciphertext of the first key in the first message based on the second key, to obtain the first key.

Optionally, the first message further carries ciphertext of the first key, signature information, and a device identifier, where the ciphertext of the first key is ciphertext obtained by a device, indicated by the device identifier, by encrypting the first key based on a second key, and the signature information is signature information generated by the device, indicated by the device identifier, based on a third key, the ciphertext of the context information of the terminal, the ciphertext of the first key, and the device identifier.

The encryption and decryption module 720 is configured to:
if the device identifier is a device identifier of the network side device, verify the signature information in the first message based on the third key and based on the ciphertext of the context information of the terminal, the ciphertext of the first key, and the device identifier that are in the first message; if the verification on the signature information in the first message succeeds, decrypt the ciphertext of the first key in the first message based on the second key, to obtain the first key; and decrypt the ciphertext of the context information based on the first key, to obtain the context information.

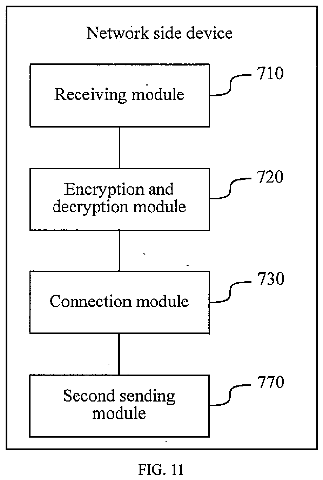

As shown in FIG. 11, the network side device further includes:
a second sending module 770, configured to: if the device identifier is not the device identifier of the network side device, send the first message to a device indicated by the device identifier.

The receiving module 710 is further configured to receive the context information sent by the device indicated by the device identifier.

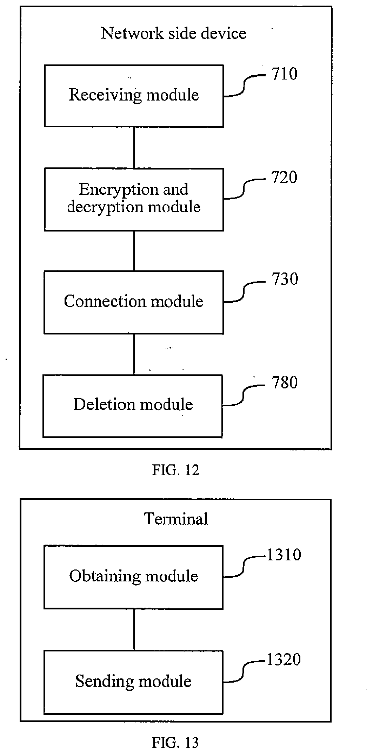

Optionally, as shown in FIG. 12, the network side device further includes:
a deletion module 780, configured to delete the context information of the terminal when the terminal enters a registration idle ECM-IDLE state.

It should be noted that the receiving module 710, the encryption and decryption module 720, the connection module 730, the first sending module 740, the first signature module 750, the second signature module 760, the second sending module 770, and the deletion module 780 may be implemented by the processor 220, or by the processor 220 in combination with the transmitter 230, the receiver 210, and the memory 240.

Examples are provided for description as follows:
The receiver 210 is configured to receive a first message sent by a terminal, where the first message carries ciphertext of context information of the terminal, and the ciphertext of the context information is information obtained by encrypting the context information of the terminal.

The processor 220 is configured to: obtain a first key, and decrypt the ciphertext of the context information based on the first key, to obtain the context information.

The processor 220 is configured to establish a communication connection for the terminal based on the context information.

Optionally, the processor 220 is further configured to:
encrypt the context information of the terminal based on the first key, to obtain the ciphertext of the context information of the terminal.

The transmitter 230 is configured to send a second message to the terminal, where the second message carries the ciphertext of the context information of the terminal.

Optionally, the processor 220 is further configured to:
encrypt the first key based on a second key, to obtain ciphertext of the first key, where the second message further carries the ciphertext of the first key.

The first message further carries the ciphertext of the first key. The processor 220 is configured to:
decrypt the ciphertext of the first key in the first message based on the second key, to obtain the first key.

Optionally, the processor 220 is further configured to:
generate signature information based on a third key, the ciphertext of the context information of the terminal, and the ciphertext of the first key, where the second message further carries the signature information.

The first message further carries the signature information. The processor 220 is further configured to:
verify the signature information in the first message based on the third key and based on the ciphertext of the context information of the terminal and the ciphertext of the first key that are in the first message; and
if the verification on the signature information in the first message succeeds, decrypt the ciphertext of the first key in the first message based on the second key, to obtain the first key.

Optionally, the processor 220 is further configured to:
sign the ciphertext of the context information of the terminal, validity time information corresponding to the context information of the terminal, and the ciphertext of the first key based on the third key, to generate the signature information, where the second message further carries the validity time information; and
the first message further carrying the validity time information, verify the signature information based on the third key and based on the ciphertext of the context information of the terminal, the ciphertext of the first key, and the validity time information that are in the first message.

Optionally, the processor 220 is further configured to:
generate signature information based on a third key, the ciphertext of the context information of the terminal, the ciphertext of the first key, and a device identifier, where the second message further carries the device identifier and the signature information;
the first message further carrying the signature information and the device identifier, verify the signature information in the first message based on the third key and based on the ciphertext of the context information of the terminal, the ciphertext of the first key, and the device identifier that are in the first message; and
if the verification on the signature information in the first message succeeds, decrypt the ciphertext of the first key in the first message based on the second key, to obtain the first key.

Optionally, the first message further carries ciphertext of the first key, signature information, and a device identifier, where the ciphertext of the first key is ciphertext obtained by a device, indicated by the device identifier, by encrypting the first key based on a second key, and the signature information is signature information generated by the device, indicated by the device identifier, based on a third key, the ciphertext of the context information of the terminal, the ciphertext of the first key, and the device identifier.

The processor 220 is configured to:
if the device identifier is a device identifier of the network side device, verify the signature information in the first message based on the third key and based on the ciphertext of the context information of the terminal, the ciphertext of the first key, and the device identifier that are in the first message; if the verification on the signature information in the first message succeeds, decrypt the ciphertext of the first key in the first message based on the second key, to obtain the first key; and decrypt the ciphertext of the context information based on the first key, to obtain the context information.

The transmitter 230 is further configured to:
if the device identifier is not the device identifier of the network side device, send the first message to a device indicated by the device identifier.

The receiver 210 is further configured to receive the context information sent by the device indicated by the device identifier.

Optionally, the processor 220 is further configured to:
delete the context information of the terminal when the terminal enters a registration idle ECM-IDLE state.

In this embodiment of the present invention, context information of a terminal is stored in the terminal, when a network side device uses the context information of the terminal, the terminal sends the context information of the terminal to the network side device. In this way, the network side device does not need to store the context information of the terminal, thereby saving storage space of the network side device. The network side device can enable more new terminals to be attached and enable more terminals to access a network.

FIG. 13 is a structural diagram of a terminal according to an embodiment of the present invention. The apparatus may be implemented as a part or a whole of the terminal through software, hardware, or a combination thereof. The terminal provided in this embodiment of the present invention can implement the procedures described in FIG. 4 to FIG. 6A and FIG. 6B in the embodiments of the present invention. The terminal includes an obtaining module 1310 and a sending module 1320.

The obtaining module 1310 is configured to obtain ciphertext of context information of the terminal when the terminal receives a paging message used to page the terminal or when the terminal detects a to-be-sent uplink message.

The sending module 1320 is configured to send a first message to a first network side device, where the first message carries the ciphertext of the context information of the terminal.

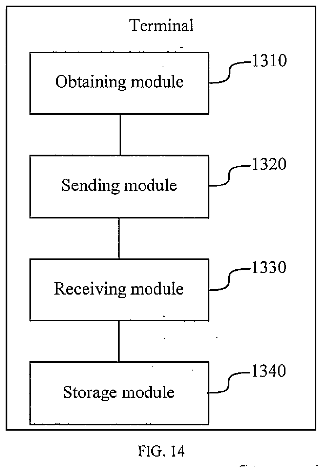

Optionally, as shown in FIG. 14, the terminal may further include:
a receiving module 1330, configured to receive a second message sent by the first network side device or a second network side device, where the second message carries the ciphertext of the context information of the terminal; and
a storage module 1340, configured to store the ciphertext of the context information of the terminal.

Optionally, the first message and the second message further carry ciphertext of a first key.

Optionally, the first message and the second message further carry signature information.

Optionally, the first message and the second message further carry validity time information corresponding to the context information of the terminal and a device identifier of a network side device sending the second message.

It should be noted that the obtaining module 1310, the sending module 1320, the receiving module 1330, and the storage module 1340 may be implemented by the processor 320, or by the processor 320 in combination with the transmitter 330, the receiver 310, and the memory 340.

Examples are provided as follows:
The processor 320 is configured to obtain ciphertext of context information of the terminal when the terminal receives a paging message used to page the terminal or when the terminal detects a to-be-sent uplink message.

The transmitter 330 is configured to send a first message to a first network side device, where the first message carries the ciphertext of the context information of the terminal.

Optionally, the terminal further includes:
the receiver 310, configured to receive a second message sent by the first network side device or a second network side device, where the second message carries the ciphertext of the context information of the terminal; and
the memory 340, configured to store the ciphertext of the context information of the terminal.

Optionally, the first message and the second message further carry ciphertext of a first key.

Optionally, the first message and the second message further carry signature information.

Optionally, the first message and the second message further carry validity time information corresponding to the context information of the terminal and a device identifier of a network side device sending the second message.

In this embodiment of the present invention, context information of a terminal is stored in the terminal, when a network side device uses the context information of the terminal, the terminal sends the context information of the terminal to the network side device. In this way, the network side device does not need to store the context information of the terminal, thereby saving storage space of the network side device. The network side device can enable more new terminals to be attached and enable more terminals to access a network.

An embodiment of the present invention further provides a communications system, including the network side device shown in any accompanying drawing in FIG. 7 to FIG. 12 and the terminal shown in any accompanying drawing in FIG. 13 and FIG. 14.

All or some of the foregoing embodiments may be implemented through software, hardware, firmware, or any combination thereof. When software is used to implement the embodiments, the embodiments may be implemented completely or partially in a form of a computer program product. The computer program product includes one or more computer instructions. When the computer program instructions are loaded and executed on the network side device and the terminal, the procedures or functions according to the embodiments of the present invention are all or partially generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, and microwave, or the like) manner. The computer-readable storage medium may be any usable medium accessible by a network side device, or a data storage device, such as a server or a data center, integrating one or more usable media. The usable medium may be a magnetic medium (for example, a floppy disk, a hard disk, or a magnetic tape), an optical medium (for example, a digital video disk (Digital Video Disk, DVD)), or a semiconductor medium (for example, a solid-state drive).

The foregoing descriptions are merely an embodiment of this application, but are not intended to limit this application. Any modification, equivalent replacement, or improvement made without departing from the principle of this application shall fall within the protection scope of this application as defined by the appended claims.

## Claims

1. A communication method performed by a first network side device, the method comprising:
• receiving a first message from a terminal, the terminal being in an ECM-IDLE state (step 403), wherein the first message carries:
o ciphertext of context information of the terminal, wherein the ciphertext of the context information is the context information in encrypted form;
• obtaining a first key, and decrypting the ciphertext of the context information based on the first key, to obtain the context information (step 404); and
• establishing a communication connection with the terminal based on the context information (step 405)
wherein the method comprises, before the receiving of the first message:
• obtaining (4011, 4012) the ciphertext of context information,
• sending (4013) a second message to the terminal, wherein the second message carries the ciphertext of the context information.

2. The method according to claim 1, wherein before the receiving the first message from the terminal, the method further comprises:
encrypting the context information of the terminal based on the first key, to obtain the ciphertext of the context information of the terminal; and
sending a second message to the terminal, wherein the second message carries the ciphertext of the context information of the terminal.

3. A communication method performed by a terminal, the terminal being in an ECM-IDLE state, the method comprising:
• obtaining ciphertext of context information of the terminal when the terminal receives a paging message used to page the terminal or when the terminal detects a to-be-sent uplink message, wherein the ciphertext of the context information is the context information in encrypted form (step 401); and
• sending a first message to a first network side device, wherein the first message carries the ciphertext of the context information of the terminal (step 402),
wherein before obtaining the ciphertext of context information, the method comprises receiving (4014) a second message, carrying the ciphertext of the context information from the first network side device, and storing the ciphertext of the context information.

4. The method according to claim 3, wherein the method further comprises:
receiving a second message from the first network side device or a second network side device, wherein the second message carries the ciphertext of the context information of the terminal; and
storing the ciphertext of the context information of the terminal.

5. The method according to claim 4, wherein the first message and the second message further carry ciphertext of a first key.

6. The method according to claim 5, wherein the first message and the second message further carry signature information.

7. The method according to claim 6, wherein the first message and the second message further carry validity time information corresponding to the context information of the terminal and a device identifier of a network side device sending the second message.

8. A first network side device comprising at least one processor coupled with a non-transitory storage medium storing executable instructions, wherein the executable instructions, when executed by the at least one processor, cause the at least one processor to perform the method according to anyone of claims 1 - 2.

9. A terminal comprising at least one processor coupled with a non-transitory storage medium storing executable instructions; wherein the executable instructions, when executed by the at least one processor, cause the at least one processor to perform the method according to any one of claims 3 - 7.

10. A computer-readable storage medium having a program recorded thereon, the program comprising instructions, wherein when the instructions are executed by a processor (220) on a first network side device , make the processor (220) perform the method according to anyone of claims 1 - 2.

11. A computer-readable storage medium having a program recorded thereon, the program comprising instructions, wherein when the instructions are executed by a processor (220) on a terminal, make the processor (220) perform the method according to anyone of claims 3 - 7.

## Patentansprüche

1. Kommunikationsverfahren, das durch ein erstes netzwerkseitiges Gerät durchgeführt wird, wobei das Verfahren umfasst:
• Empfangen einer ersten Nachricht von einem Endgerät, wobei sich das Endgerät in einem ECM-IDLE-Zustand befindet (Schritt 403), wobei die erste Nachricht Folgendes enthält:
o Schlüsseltext von Kontextinformationen des Endgeräts, wobei der Schlüsseltext der Kontextinformationen die Kontextinformationen in verschlüsselter Form ist;
• Erhalten eines ersten Schlüssels und Entschlüsseln des Schlüsseltexts der Kontextinformationen basierend auf dem ersten Schlüssel, um die Kontextinformationen zu erhalten (Schritt 404); und
• Herstellen einer Kommunikationsverbindung mit dem Endgerät basierend auf den Kontextinformationen (Schritt 405),
wobei das Verfahren vor dem Empfangen der ersten Nachricht umfasst:
• Erhalten (4011, 4012) des Schlüsseltexts von Kontextinformationen,
• Senden (4013) einer zweiten Nachricht an das Endgerät, wobei die zweite Nachricht den Schlüsseltext der Kontextinformationen enthält.

2. Verfahren nach Anspruch 1, wobei das Verfahren vor dem Empfangen der ersten Nachricht von dem Endgerät ferner umfasst:
Verschlüsseln der Kontextinformationen des Endgeräts basierend auf dem ersten Schlüssel, um den Schlüsseltext der Kontextinformationen des Endgeräts zu erhalten; und
Senden einer zweiten Nachricht an das Endgerät, wobei die zweite Nachricht den Schlüsseltext der Kontextinformationen des Endgeräts enthält.

3. Kommunikationsverfahren, das durch ein Endgerät durchgeführt wird, wobei sich das Endgerät in einem ECM-IDLE-Zustand befindet, wobei das Verfahren umfasst:
• Erhalten von Schlüsseltext von Kontextinformationen des Endgeräts, wenn das Endgerät eine Paging-Nachricht empfängt, die zum Pagen des Endgeräts verwendet wird, oder wenn das Endgerät eine zu sendende Uplink-Nachricht erkennt, wobei der Schlüsseltext der Kontextinformationen die Kontextinformationen in verschlüsselter Form ist (Schritt) 401); und
• Senden einer ersten Nachricht an ein erstes netzwerkseitiges Gerät, wobei die erste Nachricht den Schlüsseltext der Kontextinformationen des Endgeräts enthält (Schritt 402),
wobei das Verfahren vor dem Erhalten des Schlüsseltexts von Kontextinformationen das Empfangen (4014) einer zweiten Nachricht, die den Schlüsseltext der Kontextinformationen von dem ersten netzwerkseitigen Gerät enthält, und das Speichern des Schlüsseltexts der Kontextinformationen umfasst.

4. Verfahren nach Anspruch 3, wobei das Verfahren ferner umfasst:
Empfangen einer zweiten Nachricht von dem ersten netzwerkseitigen Gerät oder einem zweiten netzwerkseitigen Gerät, wobei die zweite Nachricht den Schlüsseltext der Kontextinformationen des Endgeräts enthält; und
Speichern des Schlüsseltexts der Kontextinformationen des Endgeräts.

5. Verfahren nach Anspruch 4, wobei die erste Nachricht und die zweite Nachricht ferner Schlüsseltext eines ersten Schlüssels enthalten.

6. Verfahren nach Anspruch 5, wobei die erste Nachricht und die zweite Nachricht ferner Signaturinformationen enthalten.

7. Verfahren nach Anspruch 6, wobei die erste Nachricht und die zweite Nachricht ferner Gültigkeitszeitinformationen, die den Kontextinformationen des Endgeräts entsprechen, und eine Gerätekennung eines netzwerkseitigen Geräts, das die zweite Nachricht sendet, enthalten.

8. Erstes netzwerkseitiges Gerät, das mindestens einen Prozessor umfasst, der mit einem nicht transitorischen Speichermedium gekoppelt ist, das ausführbare Anweisungen speichert, wobei die ausführbaren Anweisungen, wenn sie von dem mindestens einen Prozessor ausgeführt werden, den mindestens einen Prozessor veranlassen, das Verfahren nach einem der Ansprüche 1-2 durchzuführen.

9. Endgerät, das mindestens einen Prozessor umfasst, der mit einem nicht transitorischen Speichermedium gekoppelt ist, das ausführbare Anweisungen speichert; wobei die ausführbaren Anweisungen, wenn sie von dem mindestens einen Prozessor ausgeführt werden, den mindestens einen Prozessor veranlassen, das Verfahren nach einem der Ansprüche 3-7 durchzuführen.

10. Computerlesbares Speichermedium mit einem darauf aufgezeichneten Programm, wobei das Programm Anweisungen umfasst, wobei, wenn die Anweisungen von einem Prozessor (220) auf einem ersten netzwerkseitigen Gerät ausgeführt werden, sie den Prozessor (220) veranlassen, das Verfahren nach einem der Ansprüche 1-2 durchzuführen.

11. Computerlesbares Speichermedium mit einem darauf aufgezeichneten Programm, wobei das Programm Anweisungen umfasst, wobei, wenn die Anweisungen von einem Prozessor (220) auf einem Endgerät ausgeführt werden, sie den Prozessor (220) veranlassen, das Verfahren nach einem der Ansprüche 3-7 durchzuführen.

## Revendications

1. Procédé de communication exécuté par un premier dispositif côté réseau, le procédé comprenant :
• la réception d'un premier message d'un terminal, le terminal étant dans un état ECM-IDLE (étape 403), dans lequel le premier message transporte :
o un texte chiffré d'informations de contexte du terminal, dans lequel le texte chiffré des informations de contexte sont les informations de contexte sous forme chiffrée ;
• l'obtention d'une première clé, et le déchiffrement du texte chiffré des informations de contexte sur la base de la première clé, pour obtenir les informations de contexte (étape 404) ; et
• l'établissement d'une connexion de communication avec le terminal sur la base des informations de contexte (étape 405)
dans lequel le procédé comprend, avant la réception du premier message :
• l'obtention (4011, 4012) du texte chiffré d'informations de contexte,
• l'envoi (4013) d'un second message au terminal, dans lequel le second message transporte le texte chiffré des informations de contexte.

2. Procédé selon la revendication 1, dans lequel avant la réception du premier message du terminal, le procédé comprend en outre :
le chiffrement des informations de contexte du terminal sur la base de la première clé, pour obtenir le texte chiffré des informations de contexte du terminal ; et
l'envoi d'un second message au terminal, dans lequel le second message transporte le texte chiffré des informations de contexte du terminal.

3. Procédé de communication exécuté par un terminal, le terminal étant dans un état ECM-IDLE, le procédé comprenant :
• l'obtention d'un texte chiffré d'informations de contexte du terminal lorsque le terminal reçoit un message de radiomessagerie utilisé pour effectuer la radiomessagerie du terminal ou lorsque le terminal détecte un message de liaison montante à envoyer, dans lequel le texte chiffré des informations de contexte sont les informations de contexte sous forme chiffrée (étape 401) ; et
• l'envoi d'un premier message à un premier dispositif côté réseau, dans lequel le premier message transporte le texte chiffré des informations de contexte du terminal (étape 402),
dans lequel, avant l'obtention du texte chiffré d'informations de contexte, le procédé comprend la réception (4014) d'un second message, le transport du texte chiffré des informations de contexte du premier dispositif côté réseau et le stockage du texte chiffré des informations de contexte.

4. Procédé selon la revendication 3, dans lequel le procédé comprend en outre :
la réception d'un second message du premier dispositif côté réseau ou d'un second dispositif côté réseau, dans lequel le second message transporte le texte chiffré des informations de contexte du terminal ; et
le stockage du texte chiffré des informations de contexte du terminal.

5. Procédé selon la revendication 4, dans lequel le premier message et le second message transportent en outre le texte chiffré d'une première clé.

6. Procédé selon la revendication 5, dans lequel le premier message et le second message transportent en outre des informations de signature.

7. Procédé selon la revendication 6, dans lequel le premier message et le second message transportent en outre des informations de temps de validité correspondant aux informations de contexte du terminal et un identifiant de dispositif d'un dispositif côté réseau envoyant le second message.

8. Premier dispositif côté réseau comprenant au moins un processeur couplé à un support de stockage non transitoire stockant des instructions exécutables, dans lequel les instructions exécutables, lorsqu'elles sont exécutées par l'au moins un processeur, amènent l'au moins un processeur à exécuter le procédé selon l'une quelconque des revendications 1 et 2.

9. Terminal comprenant au moins un processeur couplé à un support de stockage non transitoire stockant des instructions exécutables ; dans lequel les instructions exécutables, lorsqu'elles sont exécutées par l'au moins un processeur, amènent l'au moins un processeur à exécuter le procédé selon l'une quelconque des revendications 3 à 7.

10. Support de stockage lisible par ordinateur sur lequel est enregistré un programme, le programme comprenant des instructions, dans lequel les instructions, lorsqu'elles sont exécutées par un processeur (220) sur un premier dispositif côté réseau, amènent le processeur (220) à exécuter le procédé selon l'une quelconque des revendications 1 et 2.

11. Support de stockage lisible par ordinateur sur lequel est enregistré un programme, le programme comprenant des instructions, dans lequel les instructions, lorsqu'elles sont exécutées par un processeur (220) sur un terminal, amènent le processeur (220) à exécuter le procédé selon l'une quelconque des revendications 3 à 7.
